# EUROPÄISCHE PATENTANMELDUNG

(11) **EP 3 778 159 A1**
(43) Veröffentlichungstag der Anmeldung: **17.02.2021**
(21) Anmeldenummer: 20189258.5
(22) Anmeldetag: 03.08.2020
(51) Int. Cl.: B27K 3/15, C08L 97/02

(54) **VERFAHREN ZUR BEHANDLUNG VON HOLZ**

(30) Priorität: 05.08.2019 DE 102019121069
(71) Anmelder: Volkswagen AG, 38440 Wolfsburg (DE); Fraunhofer-Gesellschaft zur Förderung der angewandten Forschung e.V., 80686 München (DE)
(72) Erfinder: Große, Thomas, 38108 Braunschweig (DE); Aniol, Armin, 38106 Braunschweig (DE); Fischer, Fabian, 30449 Hannover (DE); Berthold, Dirk, 37431 Bad Lauterberg (DE)
(74) Vertreter: Gulde & Partner

(57) **Zusammenfassung**

Die Erfindung betrifft ein Verfahren zur Behandlung von Holz, wobei das Holz mit einer Lösung umfassend Lignin, insbesondere Ligninsulfonat, behandelt wird. Ferner betrifft die Erfindung Holz, das mittels eines solchen Verfahrens behandelt wurde, sowie ein Automobil umfassend ein solches Holz.

## Beschreibung

Die Erfindung betrifft ein Verfahren zur Behandlung von Holz, wobei das Holz mit einer Lösung umfassend Lignin, insbesondere Ligninsulfonat, behandelt wird. Ferner betrifft die Erfindung Holz, das mittels eines solchen Verfahrens behandelt wurde, sowie ein Automobil umfassend ein solches Holz.

Zur Verbesserung der Gesamt-Kohlendioxid Bilanz bei der Herstellung und Verwendung von Fahrzeugen ist der Einsatz von nachwachsenden Rohstoffen ein effektiver Stellhebel. Holz ist ein besonders geeigneter nachwachsender Rohstoff, der neben einem attraktiven Preis und guter Verfügbarkeit über ein exzellentes Leichtbaupotenzial verfügt. Von großem Interesse sind hierbei vor allem furnier- aber auch span- beziehungsweise strandbasierte Holzhalbwaren, die neben einem großem Leichtbaupotenzial gleichzeitig auch gute mechanische Festigkeitseigenschaften versprechen.

Bei dem Transport von Holzhalbwaren zur weiteren Verarbeitung unterliegt der Werkstoff umweltklimatischen Einflüssen. Die dabei erfolgende Feuchtigkeitsaufnahme führt trotz einer vorangestellten Trocknung zu einer Quellung und Schwindung des Materials. Bei der weiteren Verarbeitung beispielsweise von Holzfurnieren mit kalt- und heißhärtenden Klebstoffsystemen kann ferner die Temperaturerhöhung eine Schwindung des Holzes bewirken und zu einer Spaltbildung zwischen dem ausgehärteten Klebstoff und dem Holz und somit zu einer verminderten Anbindung führen.

Die Feuchtigkeitsaufnahme und das damit verbundene Quellungs- und Schwindungsverhalten stellen ein bedeutendes Problem für die im Automobil geforderten strengen Form- und Maßtoleranzen dar. Quellung und Schwindung kann insbesondere bei dünnen Holzmaterialien bereits bei geringer Feuchtigkeit zu einer Rissbildung im Material führen. Dies wird bei Betrachtung von Sorptionsisothermen deutlich. Im unteren Prozentbereich der relativen Luftfeuchtigkeit findet bereits eine Chemisorption von Wasser an die Oberfläche der Holzstruktur statt. Im Normklimabereich finden überwiegend physisorptive Vorgänge statt und im oberen Bereich der relativen Luftfeuchtigkeit findet eine Expansion durch Kapillarkondensation statt. Somit unterliegt die Holzstruktur einer permanenten Quellung und Schwindung durch die Änderung der relativen Luftfeuchtigkeit.

Aus dem Stand der Technik sind Ansätze bekannt, die darauf abstellen, eine Quellung und Schwindung des Holzes zu vermindern:
So ist beschrieben, eine Minimierung des Quell- und Schwindverhaltens von holzbasierten Halbwaren durch Lagerung unter ausgleichsfeuchtem Bedingungen entgegenzuwirken. Die Holzfeuchte sollte hierzu vor dem Einsatz des Holzes der Ausgleichsfeuchte im späteren Einsatz weitgehend angepasst werden, um Quellen und Schwinden sowie Formänderungen und Rissbildung zu minimieren.

Diese Maßnahme ist allerdings nur wenig wirksam, wenn die Feuchtigkeit im Bauteileinsatz starken Schwankungen ausgesetzt ist, da sie die Feuchtigkeitsaufnahme nicht verhindert, sondern vielmehr darauf abstellt, diese auszugleichen.

Auch bei der Verwendung von entgegengesetzten Wachstumsstrukturen mehrerer Holzfurniere können die beschriebenen nachteiligen Effekte im Verbundbauteil allenfalls minimal verhindert werden.

Ein weiterer Ansatz besteht in der Durchtränkung des Holzes mit synthetischen Polymeren, wodurch die Hohlräume der Holzstruktur gefüllt und eine Feuchtigkeitsaufnahme verhindert wird.

Beschrieben ist im Speziellen, eine Holzvorbehandlung mit Formaldehyd und nachträglicher Vernetzung unter einer Temperaturerhöhung durchzuführen (DE2052345).

Ferner ist beschreiben, ein Aufpropfen durch eine Veresterung der Holzcellulose-Materialien mit organischen Anhydriden durchzuführen (DE60305678T2).

Ferner ist beschrieben, eine Tränkung von frischem oder nassem Holz durch Paraffine durchzuführen (DE102004020729B4).

Ferner ist beschrieben, eine Modifizierung von Holz durch eine chemische und thermische Behandlung mit Harnstoff durchzuführen (DE102011104025A1).

Ferner ist beschrieben, eine Imprägnierung mit melaminhaltigem Harz durchzuführen (EP2637829B1).

Ferner ist beschrieben, ein Versiegeln des Holzes mit Oberflächenbehandlungsmitteln wie z.B. Lacken oder Deckschichten durchzuführen (EP1877232B1).

Auch für die oben beschriebenen speziellen Vorbehandlungen von Holz mit Formaldehyd, organischen Anhydriden, Paraffinen, Harnstoffen, Melaminhaltigen Harzen, Lacken, Deckschichten, Acetylierungsmitteln oder weiteren industriechemisch hergestellten Produkten wird, wie bereits erwähnt, der Kohlenstoffdioxid-Vorteil von Holzwerkstoffen zunichte gemacht und zusätzlich die Recyclebarkeit, welche bei Holz zunächst gegeben ist, negativ beeinflusst.

Ferner ist beschrieben, eine Acetylierung von Lignocellulosematerial (EP0213252B1). Die Acetlyierung von Lignocellulosematerialien führt allerdings nachteilig zur Emission von leichtflüchtigen, organischen Verbindungen und somit zur Geruchsbildung oder gesundheitsgefährdenden Verbindungen.

In der Gesamtschau sind die bekannten thermischen und/oder chemischen Verfahren zur Holzmodifizierung nicht zufriedenstellend geeignet, um eine Quellung und Schwindung des Holzes zu verhindern. Ferner gehen diese Verfahren häufig mit einer Verringerung der mechanischen Leistung einher.

Auch die in CN107972144A, CN1911612A, JP2009298132A beschriebenen Verfahren sind weniger geeignet, da diese Verfahren weitere Prozessschritte zur Nachbehandlung des Holzfurniers erfordern.

Der Erfindung liegt somit die Aufgabe zugrunde, ein Verfahren bereitzustellen, welches geeignet ist, Holz derart zu behandeln, dass eine spätere Quellung und Schwindung des Holzes vermindert wird.

Gemäß einem Aspekt betrifft die Erfindung ein Verfahren zur Behandlung von Holz, wobei das Holz mit einer Lösung umfassend Lignin behandelt wird.

Der Einsatz von Ligninverbindungen bei der Behandlung von Holzwerkstoffen vor dem Schälprozess führt, insbesondere bei einer anschließenden Trocknung, zu einer Minimierung des Quell und Schwindverhaltens und einer zusätzlichen Verstärkung der Stützstruktur.

Gemäß einer besonders bevorzugten Ausführungsform wird ein Verfahren zur Behandlung von Holz beschrieben, wobei das Lignin ein Ligninsulfonat ist.

Die Verwendung von Ligninsulfonat ist hierbei ganz besonders bevorzugt, da diese Ligninverbindung als Abfallprodukt der Zellstoffindustrie vorliegt und es daher keiner weiteren Aufarbeitung bedarf. Ligninsulfonat ist mit einer weltweiten Produktion von 3 Millionen Tonnen großtechnisch verfügbar und bietet als Abfallprodukt der Papierindustrie sowohl ökologische als auch ökonomische Vorteile.

Da es sich um ein pH neutrales Polymer handelt, wird die Holzstruktur geschont.

Die Verwendung von Ligninsulfonat ist daher besonders geeignet für eine Minimierung des Quell- und Schwindverhaltens und ermöglicht eine zusätzliche Verstärkung der Stützstruktur.

Gemäß einer weiteren bevorzugten Ausführungsform wird ein Verfahren zur Behandlung von Holz beschrieben, wobei das Verfahren einen Plastifizierschritt umfasst, wobei ein Dämpfen und/oder Kochen mit der Lösung umfassend Lignin erfolgt.

Im Zusammenhang mit der vorliegenden Erfindung ist der Begriff "Dämpfen" als Dampfbehandlung aufzufassen.

Bei dem Plastifizierschritt, der ein Dämpfen und/oder Kochen
umfasst, werden Holzbestandteile wie Zucker, Gummi, Gerbstoffe in dem Holz mittels Wasserdampf zersetzt, um die Holzeigenschaften zu verbessern.

Das Dämpfen wird in geschlossenen Behältern oder Räumen durchgeführt. Um die Holzfasern nicht zu verändern und zu schwächen, sollte eine Temperatur von bevorzugt bis zu 100 °C eingestellt werden. Bei Anwendung von Drücken über dem Atmosphärendruck können mitunter auch höhere Temperaturen eingestellt werden. In einer bevorzugten Ausführungsform sollte der Dampf zu Beginn in geringer Menge zugeführt werden, und dann intensiviert werden. Dabei wird das Holz allmählich erwärmt und die Kapillaren werden für das Eindringen des Dampfes aufgeweitet.

Bevorzugt dauert das Dämpfen und/oder Kochen 60 Stunden bis 100 Stunden, insbesondere 65 bis 85 Stunden, beispielsweise etwa 72 Stunden. Die Dauer kann von den Maßen des Holzes abhängen.

Durch die direkte Modifikation des Stammes im Dampfbad mit Lignin, insbesondere Ligninsulfonaten, kann eine entsprechende direkt weitere Verarbeitung des bereits optimierten Holzwerkstoffes erfolgen und es bedarf keiner weiteren Modifikation in der fertigungstechnologischen Prozesskette.

Gemäß einer weiteren besonders bevorzugten Ausführungsform wird ein Verfahren zur Behandlung von Holz beschrieben, wobei das Verfahren einen Plastifizierschritt umfasst, wobei ein Dämpfen und/oder Kochen mit der Lösung umfassend Ligninsulfonat erfolgt.

Die Verwendung von Ligninsulfonat beim Dämpfen oder Kochen im Zuge eines Plastifizierschrittes ist besonders bevorzugt, wobei das Ligninsulfonat beim Plastifizieren des Holzes direkt zugegeben werden kann, da es sich um ein pH neutrales, wasserlösliches und temperaturstabiles Polymer handelt. Eine entsprechende Anpassung des Plastifizierschrittes ist daher nicht notwendig.

Das Ligninsulfonat dringt zunächst im Plastifizierschritt in die Kapillaren der Holzstruktur ein und führt zu einer Stabilisierung der Hohlraumstrukturen. Durch den Eintrag des Polymers vor dem eigentlichen Schälprozess kann die nachfolgende Rissbildung vermindert werden. Des Weiteren bietet die Implementierung einer makromolekularen Struktur im Plastifizierungsprozess den Vorteil einer zusätzlichen Verstärkung der Stützstruktur und führt somit zu einer Minderung des Quell- und Schwindverhaltens und zu einer Verbesserung der Zug- und Biegefestigkeit.

Durch den Eintrag der polyaromatischen Struktur wird die Beständigkeit vor ultravioletter Strahlung erhöht und pilzbasierte Degradationsprozesse minimiert. Die Farbe des Holzwerkstoffes kann durch die Konzentration an Ligninsulfonat (Schwarzlauge) im Plastifizierprozess beeinflusst werden.

Die Einfärbung heller Holzsorten in der Verarbeitungsprozesskette kann zur Imitation industriell nutzbarer Holzarten, wie beispielsweise Douglasie, Eibe, Lärche, Mahagoni, Afrikanisches Ebenholz, europäische Eiche, Erle, Kirsche, Linde, Teak, Ulme, Walnuss und verwandter Holzarten genutzt werden. Die Massenerhöhung führt neben der Veränderung der mechanischen Eigenschaften ebenfalls zu verbesserten Dämpfungs- sowie Schwingungseigenschaften. Ein Fügen mehrerer Holzwerkstoffe durch mechanisches Verpressen und/oder einer Temperaturerhöhung könnte ebenfalls mit Ligninverbindungen erreicht werden.

Ligninsulfonat weist eine gute Wasserlöslichkeit bei einem pH-Wert von 5-6 auf und besitzt keine GHS-Einstufung und führt somit zu keiner Gefährdung bei der Handhabung.

Diese Vorteile werden, wie bereits erwähnt, noch weiter dadurch unterstrichen, dass Linginsulfonat als Abfallprodukt der Zellstoffindustrie vorliegt und es daher keiner weiteren Aufarbeitung bedarf.

Gemäß einer weiteren bevorzugten Ausführungsform wird ein Verfahren zur Behandlung von Holz beschrieben, wobei das Verfahren nach dem Plastifizierschritt einen Trocknungsschritt umfasst.

Gemäß einer weiteren bevorzugten Ausführungsform wird ein Verfahren zur Behandlung von Holz beschrieben, wobei das Verfahren einen Vorbehandlungsschritt umfasst, wobei eine Vorbehandlungslösung auf das Holz aufgebracht wird.

Ein solcher Vorbehandlungsschritt ist erfindungsgemäß nicht zwingend notwendig. Allerdings kann eine Vorbehandlung zusätzlich dazu beitragen, eine Minimierung des Quell- und Schwindverhaltens und eine zusätzliche Verstärkung der Stützstruktur bewirken.

Gemäß einer weiteren bevorzugten Ausführungsform wird ein Verfahren zur Behandlung von Holz beschrieben, wobei die Vorbehandlungslösung Lignin, bevorzugt Ligninsulfonat, umfasst.

Gemäß einer weiteren bevorzugten Ausführungsform wird ein Verfahren zur Behandlung von Holz beschrieben, wobei das Verfahren einen Vorbehandlungsschritt durch Aufbringen einer Vorbehandlungslösung umfasst, die Lignin, bevorzugt Ligninsulfonat, umfasst und einen Plastifizierschritt, wobei ein Dämpfen und/oder Kochen mit der Lösung umfassend Ligninsulfonat erfolgt.

Gemäß dieser Ausführungsform erfolgt also während des Vorbehandlungsschrittes als auch während des Plastifizierschrittes eine Behandlung mit Ligninverbindung. Dies trägt zusätzlich dazu bei, eine Minimierung des Quell- und Schwindverhaltens und eine zusätzliche Verstärkung der Stützstruktur zu bewirken.

Gemäß einer weiteren bevorzugten Ausführungsform wird ein Verfahren zur Behandlung von Holz beschrieben, wobei die Vorbehandlungslösung einen Haftvermittler umfasst.

Als Haftvermittler sind insbesondere folgende Strukturen zu nennen: dem Maleinsäureanhydrid verwandte Molekülstrukturen, Humine, Tannine, Cellulose-basierte Polymerstrukturen wie beispielsweise Nanocellulose, Zucker aus Hemicellulose, Kohlenstoffbasierte Nanostrukturen (CNT), und Polymilchsäuren.

Die Haftvermittler bewirken, dass das Lignin besser an das Holz anbinden und in die Holzstruktur eindringen kann.

Gemäß einer weiteren bevorzugten Ausführungsform wird ein Verfahren zur Behandlung von Holz beschrieben, wobei das Auftragen der Vorbehandlungslösung erfolgt durch ein
oder mehrere Verfahren ausgewählt aus händischem Auftragen; Vakuuminfusion; Spritzformen; Kompressionsformen; Co-Verkneten; Walzenauftrag; Aufsprühen;
Benebeln. Bei der händischen Auftragung wird die Lösung mit einem Pinsel, Kellen, Spatel oder ähnlichen Mitteln aufgetragen.

Gemäß einem weiteren Aspekt der Erfindung wird Holz beschrieben, wobei das Holz erhalten wurde durch Anwendung des erfindungsgemäßen Verfahrens. Gemäß diesem Aspekt wurde das Holz erhalten durch Behandeln mit einer Lösung umfassend Lignin.

Bei dem Holz handelt es sich insbesondere um eine Holzhalbware.

Gemäß einer bevorzugten Ausführungsform wird Holz beschrieben, wobei das Holz erhalten wurde durch Behandeln mit einer Lösung umfassend Lignin, wobei das Lignin ein Ligninsulfonat ist.

Feuchtigkeitsaufnahme und das damit verbundene Quellungs- und Schwindungsverhalten stellen ein bedeutendes Problem insbesondere für die in Automobilen geforderten strengen Form- und Maßtoleranzen dar. Quellung und Schwindung kann insbesondere bei den in der Automobilindustrie verwendeten dünnen Holzmaterialien bereits bei geringer Feuchtigkeit zu einer Rissbildung im Material führen.

Gemäß einem weiteren Aspekt der Erfindung wird daher ein Automobil beschrieben, welches Holz umfasst, wobei das Holz erhalten wurde durch Anwendung des erfindungsgemäßen Verfahrens, wobei das Holz erhalten wurde durch Behandeln mit einer Lösung umfassend Lignin, wobei das Lignin bevorzugt ein Ligninsulfonat ist.

Das Ligninsulfonat dringt, wie bereits beschrieben, im Plastifizierschritt in die Kapillaren der Holzstruktur ein und führt zu einer Stabilisierung der Hohlraumstrukturen. Durch den Eintrag des Polymers vor dem eigentlichen Schälprozess kann die nachfolgende Rissbildung vermindert werden. Es findet also eine Implementierung einer makromolekularen Struktur im Plastifizierungsprozess statt.

Hierdurch kann Holz, welches gemäß dem erfindungsgemäßen Verfahren behandelt wurde, von solchem Holz unterschieden werden, welches unbehandelt oder mittels anderer Verfahren behandelt wurde.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

## Patentansprüche

1. Verfahren zur Behandlung von Holz, **dadurch gekennzeichnet, dass** das Holz mit einer Lösung umfassend Lignin behandelt wird.

2. Verfahren zur Behandlung von Holz gemäß Anspruch 1, **dadurch gekennzeichnet, dass** das Lignin ein Ligninsulfonat ist.

3. Verfahren zur Behandlung von Holz gemäß einem der vorhergehenden Ansprüche, **dadurch gekennzeichnet, dass** das Verfahren einen Plastifizierschritt umfasst, wobei ein Dämpfen und/oder Kochen mit der Lösung umfassend Lignin, bevorzugt Ligninsulfonat, erfolgt.

4. Verfahren zur Behandlung von Holz gemäß dem vorhergehenden Anspuch, **dadurch gekennzeichnet, dass** das Verfahren nach dem Plastifizierschritt einen Trocknungsschritt umfasst.

5. Verfahren zur Behandlung von Holz gemäß einem der vorhergehenden Ansprüche, **dadurch gekennzeichnet, dass** das Verfahren einen Vorbehandlungsschritt umfasst, wobei eine Vorbehandlungslösung auf das Holz aufgebracht wird.

6. Verfahren zur Behandlung von Holz gemäß dem vorhergehenden Anspruch, **dadurch gekennzeichnet, dass** die Vorbehandlungslösung Lignin, bevorzugt Ligninsulfonat, umfasst.

7. Verfahren zur Behandlung von Holz gemäß einem der beiden vorhergehenden Ansprüche, **dadurch gekennzeichnet, dass** die Vorbehandlungslösung einen Haftvermittler umfasst.

8. Verfahren zur Behandlung von Holz gemäß einem der drei vorhergehenden Ansprüche, **dadurch gekennzeichnet, dass** das Auftragen der Vorbehandlungslösung erfolgt durch ein oder mehrere Verfahren ausgewählt aus händischem Auftragen; Vakuuminfusion; Spritzformen; Kompressionsformen; Co-Verkneten; Pultrusion; Walzenauftrag; Aufsprühen; Benebeln.

9. Holz, **dadurch gekennzeichnet, dass** das Holz mittels eines Verfahrens gemäß einem der vorhergehenden Ansprüche behandelt wurde.

10. Automobil umfassend Holz, welches mittels eines Verfahrens gemäß einem der vorhergehenden Ansprüche 1 bis 8 behandelt wurde.
